# EUROPÄISCHE PATENTSCHRIFT

(11) **EP 0 485 841 B1**
(45) Veröffentlichungstag und Bekanntmachung des Hinweises auf die Patenterteilung: **18.08.1993**
(21) Anmeldenummer: 91118735.9
(22) Anmeldetag: 04.11.1991
(51) Int. Cl.: F16K 11/074

(54) **Wasserventil für sanitäre Anlagen**
Sanitary valve
Robinet sanitaire

(30) Priorität: 10.11.1990 DE 4035838
(43) Veröffentlichungstag der Anmeldung: 20.05.1992
(73) Patentinhaber: FRIEDRICH GROHE AKTIENGESELLSCHAFT, D-58675 Hemer (DE)
(72) Erfinder: Pawelzik, Manfred, W-4770 Soest (DE); Polhaus, Kerstin, W-5800 Hagen 1 (DE)

(56) Entgegenhaltungen:
- EP-A- 0 060 529
- DE-A- 2 841 998
- DE-U- 8 810 965

## Beschreibung

Die Erfindung betrifft ein Wasserventil für sanitäre Anlagen mit einer fest angeordneten Ventilsitzscheibe und einer über ein Betätigungsglied drehbar an der Ventilsitzscheibe angelagerten Steuerscheibe, wobei in der Ventilsitzscheibe sowohl die Zulauf- als auch die Ablauföffnungen für das Wasser ausgebildet sind und die Zulauföffnung durch Drehung der Steuerscheibe wahlweise mit verschiedenen Ablauföffnungen in Verbindung bringbar ist.
Eine derartige Ventileinrichtung ist aus der deutschen Offenlegungsschrift DE-A-28 41 998 bekannt. Bei dieser bekannten Einrichtung ist eine aus Keramikmaterial gebildete Ventilsitzscheibe ortsfest in einem Ventilgehäuse angeordnet und weist konzentrisch eine Zulauföffnung und auf einem Kreisbogen angeordnete Ablauföffnungen auf. An der Ventilsitzscheibe ist eine aus Keramikmaterial hergestellte, drehbare Steuerscheibe angelagert, wobei ebenfalls konzentrisch eine Zulauföffnung und auf dem gleichen Kreisbogen Auslauföffnungen, die mit den Auslauföffnungen der Ventilsitzscheibe durch Verdrehung mehr oder weniger in Überdeckung oder auch in eine Drehposition gebracht werden können, in der der Durchfluß unterbrochen wird.
Durch die Anordnung der Zulauföffnung im Zentrum der Ventilsitzscheibe und der Steuerscheibe und der auf einem Kreisring angeordneten Ablauföffnungen ist ein relativ großer Durchmesser der beiden Ventilsitzscheiben erforderlich.

Der Erfindung liegt die Aufgabe zugrunde, das Wasserventil gemäß dem Oberbegriff des Patentanspruchs 1 zu verbessern und insbesondere so auszubilden, daß bei möglichst kleinem Durchmesser der Ventilscheiben möglichst große Maximaldurchströmquerschnitte ermöglicht werden.
Diese Aufgabe wird erfindungsgemäß dadurch gelöst, daß die Zulauf- und Ablauföffnungen konzentrisch zur Mittelachse auf einem Kreisbogen angeordnet sind, wobei die Ventilsitzscheibe eine Zulauföffnung und zu jeder Seite eine Ablauföffnung hat, während die Steuerscheibe mit einer Verschlußfläche für den Querschnitt der Zulauföffnung versehen ist und im Anschluß auf dem Kreisbogen zu beiden Seiten der Verschlußfläche eine Überströmöffnung aufweist, so daß aus der Schließstellung durch eine Rechts- oder Linksdrehung der Steuerscheibe ein im Querschnitt variabler Überströmkanal durch eine Überströmöffnung von der Zulauföffnung zu einer Ablauföffnung herstellbar ist.
Weitere Ausgestaltungen der Erfindung sind in den Ansprüchen 2 bis 7 angegeben.

Ausführungsbeispiele der Erfindung sind in der Zeichnung dargestellt und werden im folgenden näher erläutert. Es zeigt
- Figur 1: ein Wasserventil in voll geöffneter Stellung in der Schnittebene I der Figur 2;
- Figur 2: das Wasserventil gemäß Figur 1 in der Schnittebene II;
- Figur 3: das Wasserventil gemäß Figur 1 in der Absperrstellung in der Schnittebene III der Figur 4;
- Figur 4: das Wasserventil gemäß Figur 3 in der Schnittebene IV;
- Figur 5: eine Ventilsitzscheibe gemäß Figur 1 in der Schnittebene V der Figur 6;
- Figur 6: die Ventilsitzscheibe gemäß Figur 5 in Draufsicht;
- Figur 7: eine Steuerscheibe gemäß Figur 1 in der Schnittebene VII der Figur 8;
- Figur 8: die Steuerscheibe gemäß Figur 7 in Draufsicht;
- Figur 9: ein anderes Ausführungsbeispiel einer Steuerscheibe in Draufsicht;
- Figur 10: die Steuerscheibe gemäß Figur 9 in der Schnittebene X;
- Figur 11: die Anordnung der Überströmöffnungen zu den Zu- und Ablauföffnungen, bei einer Drehung um etwa 15° aus der Absperrstellung in schematischer Darstellung;
- Figur 12: die Anordnung der Überströmöffnungen zu den Zu- und Ablauföffnungen bei einer Drehung von etwa 25° aus der Absperrstellung in schematischer Darstellung;
- Figur 13: die Anordnung der Überströmöffnungen zu den Zu- und Ablauföffnungen bei einer Drehung von etwa 35° aus der Absperrstellung in schematischer Darstellung;

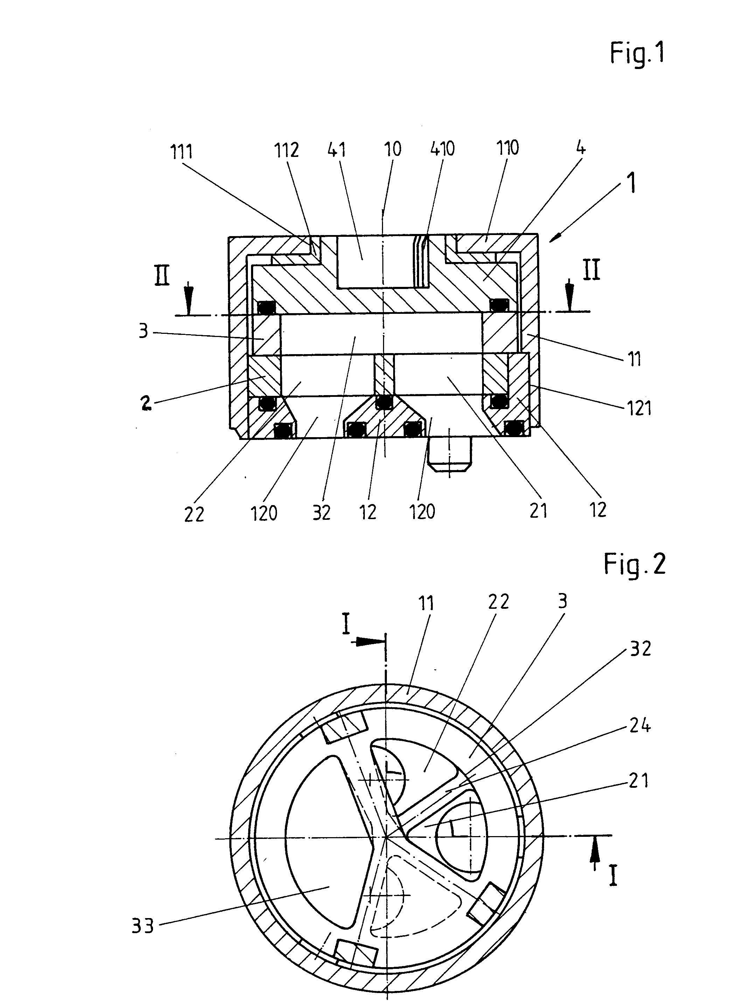

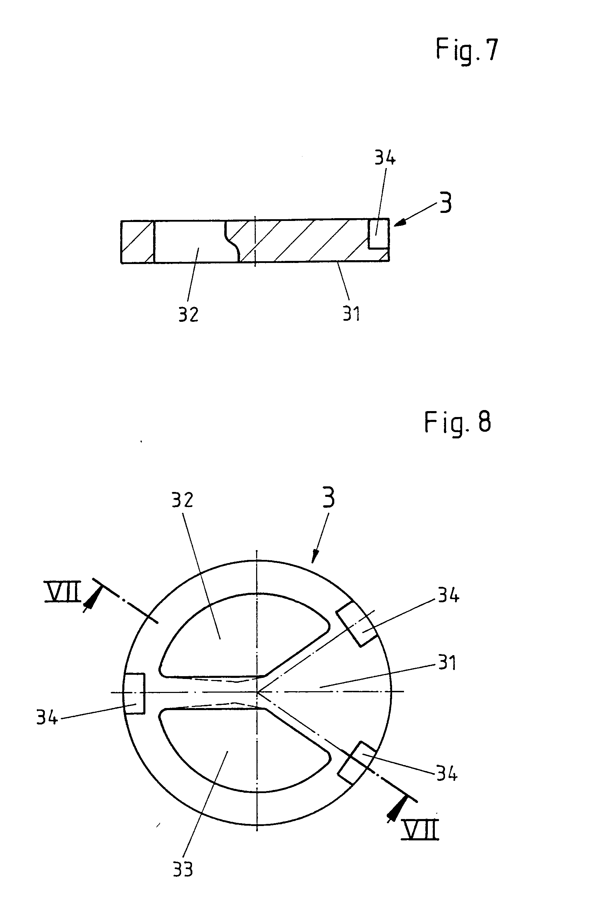

Das in den Figuren 1 bis 8 dargestellte Wasserventil ist in einer Kartusche 1 gekapselt angeordnet. Die Kartusche 1 kann als eine Baueinheit in sanitären Wasserarmaturen eingesetzt werden. Die Kartusche 1 wird im wesentlichen von einer topfartigen Hülse 11 mit einem Boden 12 gebildet. Der Boden 12 kann dabei durch Reibschluß und/oder durch axial begrenzt verschiebbare Schnappzungen etc. in der Stecklage gesichert werden.
Konzentrisch zur Mittelachse 10 ist an der dem Boden 12 gegenüberliegenden Stirnseite an der Hülse 11 eine Anlageschulter 110 ausgebildet, an der unter Zwischenlage eines Gleitrings 112 ein Betätigungsglied für eine Steuerscheibe 3 angelagert ist. In der Anlageschulter 110 ist konzentrisch zur Mittelachse 10 die Öffnung 111 ausgebildet, durch die das Betätigungsglied 4 mit einem Ansatz hindurchgeführt ist, so daß das Betätigungsglied 4 axial an der Anlageschulter 110 und radial durch die Öffnung 111 geführt wird. Konzentrisch an dem vorstehenden Bereich des Betätigungsglieds 4 ist eine Öffnung 41 zur Aufnahme eines Betätigungsgriffs oder einer Betätigungsspindel (in der Zeichnung nicht dargestellt) vorgesehen, wobei in der Seitenwandung eine Verzahnung 410 ausgebildet ist. An der dem Gleitring 112 gegenüberliegenden Stirnseite des Betätigungsglieds 4 ist die Steuerscheibe 3 angelagert. Die Steuerscheibe 3 weist dabei zwei symmetrisch zueinander angeordnete Überströmöffnungen 32,33 auf, die als Durchbrüche ausgebildet sind und von der Stirnseite des Betätigungsglieds 4 mit Hilfe von Dichtungen 13 geschlossen sind. Zur drehfesten Verbindung von Steuerscheibe 3 und Betätigungsglied 4 sind Axialschlitze 34 der Steuerscheibe 3 vorgesehen, in die das Betätigungsglied 4 mit entsprechenden Zapfen einfaßt. Alternativ kann die drehfeste Verbindung der Steuerscheibe 3 mit dem Betätigungsglied 4 auch durch die Ausbildung von geringfügig vorkragenden Vorsprüngen an dem Betätigungsglied 4 erreicht werden, die in der Einbaulage geringfügig in die Überströmöffnungen 32,33 einfassen.
An der Steuerscheibe 3 ist eine Ventilsitzscheibe 2 ortsfest in dem Boden 12 und der Hülse 11 angeordnet. Zur Drehsicherung sind an der Mantelfläche der Ventilsitzscheibe 2 Axialschlitze 25 ausgebildet, die in entsprechende Rippen 121 im Boden 12 einfassen. In der Ventilsitzscheibe 2 ist eine Zulauföffnung 21 angeordnet und zu beiden Seiten mit Abstand zueinander je eine Ablauföffnung 22,23. Die drei Öffnungen sind dabei als Ringsegmente auf einem Kreisbogen angeordnet und weisen etwa einen Querschnitt in Dreieckform auf. Zwischen der Zulauföffnung 21 und den beiden Ablauföffnungen 22,23 ist jeweils eine eine gleiche Breite aufweisende Dichtfläche 24 ausgebildet, deren Mittellinie jeweils durch den Mittelpunkt der Ventilsitzscheibe 2 führt. Die Zulauföffnung 21 und die beiden Ablauföffnungen 22,23 sind mit Durchbrüchen 120 im Boden 12 verbunden, wobei zur Abdichtung zur Ventilsitzscheibe 2 und zum Armaturenkörper der Sanitärarmatur (in der Zeichnung nicht dargestellt) Dichtungen 13 vorgesehen sind. Zur drehfesten Verbindung des Bodens 12 mit der Hülse 11 ist an dem Boden 12 im Bereich der Außenwandung eine Rippe 121 ausgebildet, die in eine entsprechende Nut in der Hülse 11 einfaßt.

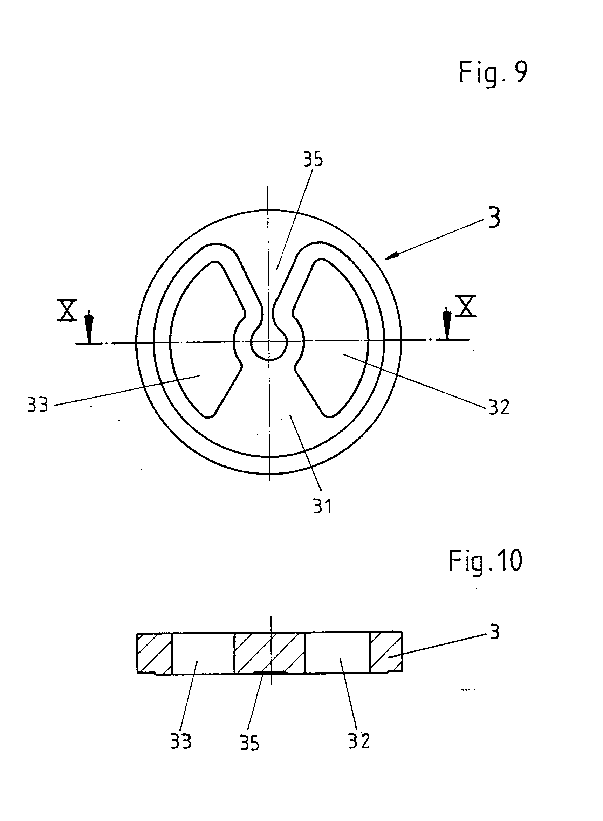

In den Figuren 9 und 10 ist ein anderes Ausführungsbeispiel einer Steuerscheibe 3 dargestellt, die alternativ in ein Wasserventil gemäß Figur 1 eingesetzt werden kann. Bei dieser Steuerscheibe 3 ist die Stirnseite, die mit der Ventilsitzscheibe 2 zusammenwirkt, zusätzlich mit einer Gleitstoffkammer 35 versehen, so daß eine gleichbleibende Versorgung der Anlageflächen mit Gleitmittel sichergestellt werden kann. Gleitstoff in Form von Fett wird meist bei der Verwendung von Ventilscheiben aus Hartkeramik zur leichtgängigen Verdrehung benötigt. Wie insbesondere aus Figur 9 ersichtlich ist, erstreckt sich die Gleitstoffkammer 35 vom Mittelpunkt radial bis zur Außenwand, so daß eine optimale Gleitmittelversorgung ermöglicht ist.

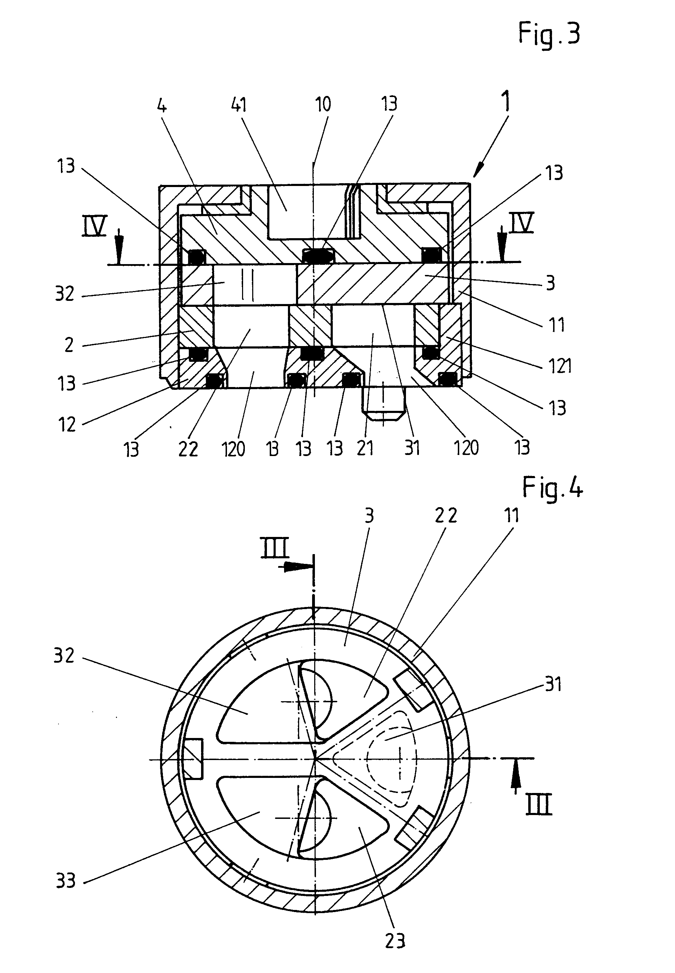

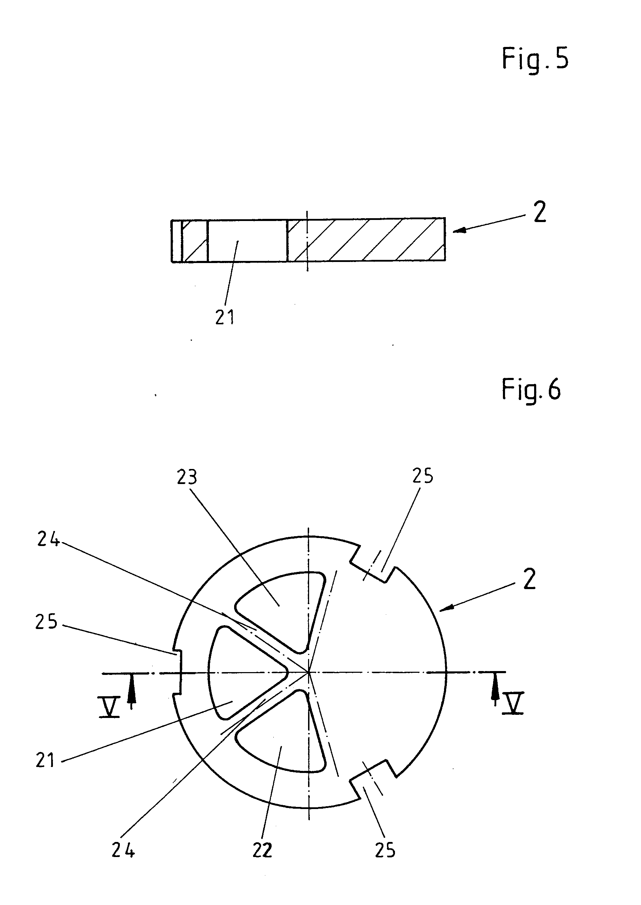

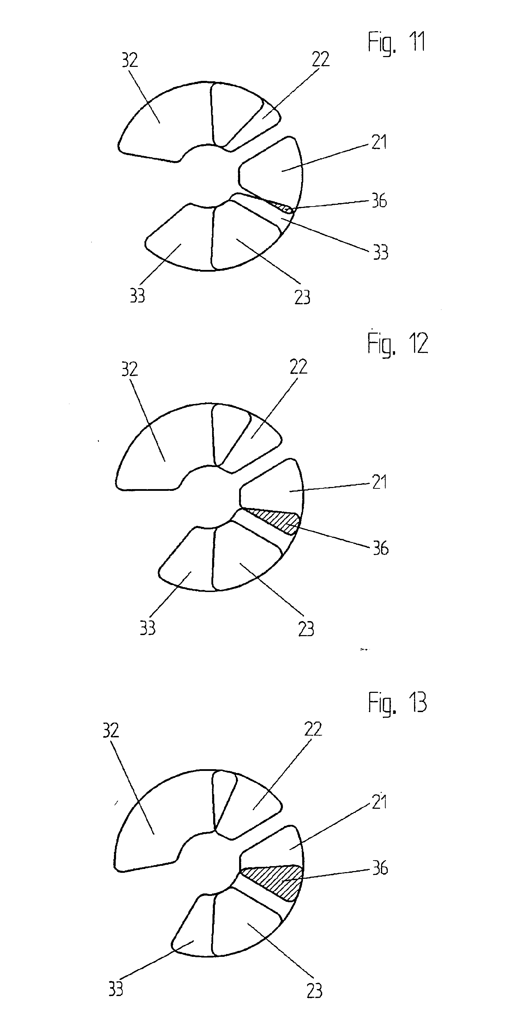

Die Funktionsweise des Wasserventils geschieht in folgender Weise:
Bei der in Figur 3 und 4 dargestellten Stellung der Steuerscheibe 3 ist die Zulauföffnung 21 von einer Verschlußfläche 31 der Steuerscheibe 3 über die Dichtflächen 24 abgesperrt. Wird nun das Betätigungsglied 4 der Steuerscheibe 3 um etwa 15° verdreht, so ergibt sich eine Stellung der Überströmöffnungen 32,33, wie sie aus Figur 11 ersichtlich ist. Die Überströmöffnung 33 gelangt bei diesem Drehwinkel in Überdeckung mit der Zulauföffnung 21, wobei ein im Querschnitt etwa dreieckig geformter Durchtrittsquerschnitt 36 entsteht. Wird die Steuerscheibe 3 gleicherweise weitergedreht, so entsteht bei etwa 25° (Figur 12) ein entsprechend vergrößertes Dreieck und bei einer Drehung von etwa 35° (Figur 13) wird der Durchtrittsquerschnitt 36 ringsegmentartig vergrößert. Durch diese Ausbildung und Anordnung der Zulauföffnung 21 und der Überströmöffnungen 32,33 wird eine feinfühlige Öffnungs- und Schließcharakteristik des Wasserventils erreicht. Ein unerwünschtes, schlagartiges Öffnen und Schließen wird vermieden. Das zuströmende Wasser aus der Zulauföffnung 21 gelangt somit über den Durchtrittsquerschnitt 36 in die Überströmöffnung 33 und von hier in die Ablauföffnung 23, die mit einem Verbraucher, z.B. einer Brause, in Verbindung steht. Durch eine wahlweise Verdrehung der Steuerscheibe 3 kann somit der Brause dosiert Wasser zugeführt werden.
Wird dagegen die Steuerscheibe 3 mit Hilfe des Betätigungsglieds 4 aus der Schließstellung gemäß Figur 3 und 4 in einer entgegengesetzten Richtung verdreht, so gelangt die Überströmöffnung 32 in gleicher Weise mit der Zulauföffnung 21 in Verbindung und es strömt nunmehr Wasser entsprechend dem Durchtrittsquerschnitt in die Überströmöffnung 32 und von hier in die Ablauföffnung 22, die mit einem anderen Verbraucher, z.B. einem Badewannenauslauf, in Verbindung steht. In Abhängigkeit von der Drehstellung kann somit ebenfalls dem Badewannenauslauf dosiert Wasser zugeführt werden.

Die Ventilscheiben, Steuerscheibe 3 und Ventilsitzscheibe 2, können sowohl aus Hartkeramikmaterial als auch einem anderen geeigneten Werkstoff bestehen. Auch können die Ventilscheiben aus unterschiedlichem Werkstoff hergestellt sein.

## Patentansprüche

1. Wasserventil für sanitäre Anlagen mit einer fest angeordneten Ventilsitzscheibe (2) und einer über ein Betätigungsglied (4) drehbar an der Ventilsitzscheibe angelagerten Steuerscheibe (3), wobei in der Ventilsitzscheibe (2) sowohl die Zulauf- als auch die Ablauföffnungen für das Wasser ausgebildet sind und die Zulauföffnung durch Drehung der Steuerscheibe wahlweise mit verschiedenen Ablauföffnungen in Verbindung bringbar ist, dadurch gekennzeichnet, daß die Zulauf- und Ablauföffnungen (21,22,23) konzentrisch zur Mittelachse auf einem Kreisbogen angeordnet sind, wobei die Ventilsitzscheibe (2) eine Zulauföffnung (21) und zu jeder Seite eine Ablauföffnung (22,23) hat, während die Steuerscheibe (3) mit einer Verschlußfläche (31) für den Querschnitt der Zulauföffnung (21) versehen ist und im Anschluß auf dem Kreisbogen zu beiden Seiten der Verschlußfläche (31) eine Überströmöffnung (32,33) aufweist, so daß aus der Schließstellung durch eine Rechts- oder Linksdrehung der Steuerscheibe (3) ein im Querschnitt variabler Überströmkanal durch eine Überströmöffnung (32 oder 33) von der Zulauföffnung (21) zu einer Ablauföffnung (22 oder 23) herstellbar ist.

2. Wasserventil nach Anspruch 1, dadurch gekennzeichnet, daß die Zulauf-, Ablauf- und Überströmöffnungen (21,22,23,32,33) im Querschnitt kreissegmentartig ausgebildet sind und die Öffnungen in der Ventilsitzscheibe (2) zueinander jeweils mit einer Dichtfläche (24) getrennt sind, die eine Abdichtung mit der Steuerscheibe (3) zueinander ermöglicht.

3. Wasserventil nach Anspruch 1 oder 2, dadurch gekennzeichnet, daß auf der der Verschlußfläche (31) gegenüberliegenden Seite in Form einer Aussparung eine Gleitstoffkammer (35) in der Steuerscheibe (3) vorgesehen ist.

4. Wasserventil nach einem der Ansprüche 1 bis 3, dadurch gekennzeichnet, daß die Dichtflächen (24) über ihre Länge eine gleichbleibende Breite aufweisen, deren Mittellinie durch den Mittelpunkt der Ventilsitzscheibe (2) geführt ist, so daß bei einer Verdrehung der Steuerscheibe (3) aus der Absperrstellung zunächst ein etwa dreieckiger Durchtrittsquerschnitt (36) (Figur 11) freigegeben ist.

5. Wasserventil nach einem der Ansprüche 1 bis 4, dadurch gekennzeichnet, daß die Ventilsitzscheibe (2) und die Steuerscheibe (3) mit einem Betätigungsglied (4) in einer Kapsel oder Kartusche (1) zu einer Baueinheit zusammengefaßt sind, die als Einheit in Sanitärarmaturen einsetzbar ist.

6. Wasserventil nach einem der Ansprüche 1 bis 5, dadurch gekennzeichnet, daß das Betätigungsglied (4) an der von der Steuerscheibe (3) abgekehrten Stirnseite zentral eine Öffnung (41) vorzugsweise eine im Querschnitt polygonförmige Öffnung für die Aufnahme einer Drehspindel und/oder Drehgriff aufweist.

7. Wasserventil nach Anspruch 5, dadurch gekennzeichnet, daß die Kapsel oder Kartusche (1) von einer topfartigen Hülse (11) mit einer Anlageschulter (110) für das Betätigungsglied (4) und einer zentralen Öffnung (111) für die Ventilbetätigung sowie einem Boden (12), der zu den Zu- und Ablauföffnungen (21,22,23) in der Ventilsitzscheibe (2) Durchbrüche (120) mit Dichtungen (13) zur Verbindung mit der Sanitärarmatur aufweist, wobei der Boden (12) mittels Reibschluß und/oder Schnappverbindung mit der Hülse (11) verbindbar ist und daß der Boden (12) in der Hülse (11) in der Stecklage zur Ausgleichung von Fertigungstoleranzen und/oder unterschiedlichen Pressungen der Ventilelemente begrenzt axial verschiebbar ist.

## Claims

1. Water valve for sanitary installations with a fixedly arranged valve seat disc (2) and a control disc (3) mounted on the valve seat disc so as to be rotatable by an actuating member (4), wherein both the inflow and the outflow openings for the water are formed in the valve seat disc (2), and the inflow opening, by rotation of the control disc, can be brought selectively into communication with different outflow openings, characterised in that the inflow and outflow openings (21, 22, 23) are arranged concentrically with the central axis on an arc, the valve seat disc (2) having an inflow opening (21) and at each side an outflow opening (22, 23), while the control disc (3) is provided with a closure surface (31) for the cross-section of the inflow opening (21), and has adjoining, on the arc on both sides of the closure surface (31), a flow-over opening (32, 33), so that from the closed position, by rotation of the control disc (3) to the right or the left, a flow-over channel variable in cross-section can be formed through a flow-over opening (32 or 33) from the inflow opening (21) to an outflow opening (22 or 23).

2. Water valve according to Claim 1, characterised in that the inflow, outflow and flow-over openings (21, 22, 23, 32, 33) have in cross-section the shape of a segment of a circle, and the openings in the valve seat disc (2) are separated with respect to one another in each case by a sealing surface (24), which allows sealing with respect to one another with the control disc (3).

3. Water valve according to Claim 1 or 2, characterised in that on the opposite side from the closure surface (31) a lubricant chamber (35) in the form of a recess is provided in the control disc (3).

4. Water valve according to one of Claims 1 to 3, characterised in that the sealing surfaces (24) have a constant width over their length, the centre line of which passes through the centre point of the valve seat disc (2), so that on rotation of the control disc (3) out of the shut-off position, an approximately triangular passage cross-section (36) (Figure 11) is first liberated.

5. Water valve according to one of Claims 1 to 4, characterised in that the valve seat disc (2) and the control disc (3) are combined with an actuating member (4) in a capsule or cartridge (1) to form a constructional unit which can be installed as a unit in sanitary fittings.

6. Water valve according to one of Claims 1 to 5, characterised in that the actuating member (4) has centrally on the side facing away from the control disc (3) an opening (41), preferably an opening which is polygonal in cross-section, to receive a turning spindle and/or turning handle.

7. Water valve according to Claim 5, characterised in that the capsule or cartridge (1) has a pot-like sleeve (11) with a bearing shoulder (110) for the actuating member (4) and a central opening (111) for the valve actuation, as well as a floor (12) which has apertures (120), to the inflow and outflow openings (21, 22, 23) in the valve seat disc (2), with seals (13) for connection to the sanitary fitting, the floor (12) being arranged to be connected to the sleeve (11) by means of friction and/or a snap connection, and that the floor (12) is axially displaceable to a limited extent in the sleeve (11) in the inserted position to compensate for manufacturing tolerances and/or different pressing of the valve elements.

## Revendications

1. Elément de robinet pour des installations sanitaires comportant un disque formant siège de soupape (2), monté fixe et sur lequel vient un disque de commande (3) qui peut être tourné par l'intermédiaire d'un organe de manoeuvre (4), le disque formant siège de soupape (2) ayant à la fois les orifices d'arrivée et de sortie pour l'eau et l'orifice d'arrivée peut être mis en communication, sélectivement par rotation du disque de commande avec les différents orifices de sortie, soupape caractérisée en ce que les orifices d'arrivée et de sortie (21, 22, 23) sont répartis sur un arc de cercle concentrique à l'axe médian, le disque formant siège de soupape (2) ayant un orifice d'arrivée (21) et de chaque côté un orifice de sortie (22, 23) alors que le disque de commande (3) est muni d'une surface de fermeture (31) pour la section de l'orifice d'arrivée (21) et possède un orifice de débordement (32, 33) en concordance sur l'arc de cercle des deux côtés de la surface d'obturation (31) de façon que partant de la position de fermeture, par une rotation du disque de commande (3) vers la droite ou vers la gauche, on établit un canal de débordement de section variable à travers un orifice de débordement (32 ou 33) à partir de l'orifice d'arrivée (21) vers un orifice de sortie (22 ou 23).

2. Elément selon la revendication 1, caractérisé en ce que les orifices d'arrivée, de sortie et de débordement (21, 22, 23, 32, 33) ont une section en forme de segment de cercle et les orifices du disque à siège de soupape (2) sont séparés chaque fois par une surface d'étanchéité (24) qui permet une étanchéité réciproque avec le disque de commande (3).

3. Elément selon la revendication 1 ou 2, caractérisé en ce que le disque de commande (3) comporte du côté en regard de la surface d'obturation (31), une chambre (35) pour un matériau de glissement, cette chambre ayant la forme d'une cavité.

4. Elément selon l'une des revendications 1 à 3, caractérisé en ce que les surfaces d'étanchéité (24) ont une largeur constante sur leur longueur et l'axe passe par le centre du disque à siège de soupape (2) de façon que pour une rotation du disque de commande (3) à partie de sa position de fermeture, cela libère tout d'abord une section de passage (36) (figure 11) de forme sensiblement triangulaire.

5. Elément selon l'une des revendications 1 à 4, caractérisé en ce que le disque formant siège de soupape (2) et le disque de commande (3) sont réunis avec un organe de manoeuvre (4) dans une capsule ou cartouche (1) pour former un ensemble qui se place tel quel comme élément du robinet sanitaire.

6. Elément selon l'une des revendications 1 à 5, caractérisé en ce que l'organe de manoeuvre (4) comporte au centre de la face opposée à celle du disque de commande (3), un orifice (41) de préférence un orifice de section polygonale pour recevoir une broche d'entraînement en rotation et/ou une poignée.

7. Elément selon la revendication 5, caractérisé en ce que la capsule ou cartouche (1) est entourée par un manchon (11) en forme de pot avec un épaulement d'appui (110) pour l'organe de manoeuvre (4) et un orifice (111) pour actionner la soupape ainsi qu'un fond (12) avec des passages (120) et des joints (13) vers les orifices d'arrivée et de sortie (21, 22, 23) du disque à siège de soupape (2) pour la liaison avec le robinet sanitaire, le fond (12) étant relié au manchon (11) par une liaison par frottement et/ou enclipsage et le fond (12) peut coulisser axialement dans le manchon (11) en position engagée pour compenser les tolérances de fabrication et/ou les pressions différentes des éléments de la soupape.
